# EUROPEAN PATENT SPECIFICATION

(11) **EP 3 346 144 B1**
(45) Date of publication and mention of the grant of the patent: **05.06.2024**
(21) Application number: 18150624.7
(22) Date of filing: 08.01.2018
(51) Int. Cl.: F16B 2/22, F16B 21/08, F16B 5/01, F16B 5/06

(54) **PAD MOUNTING CLIP**
PAD-MONTAGECLIP
PINCE DE MONTAGE DE TAMPON

(30) Priority: 10.01.2017 GB 201700363
(43) Date of publication of application: 11.07.2018
(73) Proprietor: Nissan Motor Manufacturing (UK) Ltd., Cranfield Bedfordshire MK43 0DB (GB)
(72) Inventor: PARKINSON, Tim, Bedford, Bedfordshire MK430DB (GB)

(56) References cited:
- WO-A1-2015/168258
- GB-A- 1 075 301
- JP-A- 2009 074 585

## Description

### Technical Field of the Invention

In an aspect, the present invention relates to a pad mounting clip; and more particularly, to a clip for use in mounting a pad to a vehicle structure. In another aspect, the invention relates to the combination of a pad and a clip for mounting the pad to a vehicle structure. In a further aspect, the invention relates to a vehicle in which a pad is mounted to the vehicle structure using one or more clips. A still further aspect of the invention relates to a method of mounting a foam pad to a vehicle structure.

### Background to the Invention

Foam pads are used in vehicles to improve NVH (noise, vibration, and harshness) characteristics. Such foam pads are often made from EPDM (Ethylene Propylene Diene Monomer), and are mounted to structural components of the vehicle body to dampen and absorb vibration and noise. They are used particularly in areas around the engine bay of a vehicle; but can be used elsewhere.

A variety of different techniques are used to secure foam pads to a vehicle structure. In some cases, a foam pad can be located using an interference fit; but often, a pad will be secured in position using an adhesive and/or a clip. Where a clip is used, the clip is generally pre-assembled to the foam pad by a supplier to form a sub-assembly, before being forwarded to the vehicle assembly plant for mounting on the vehicle.

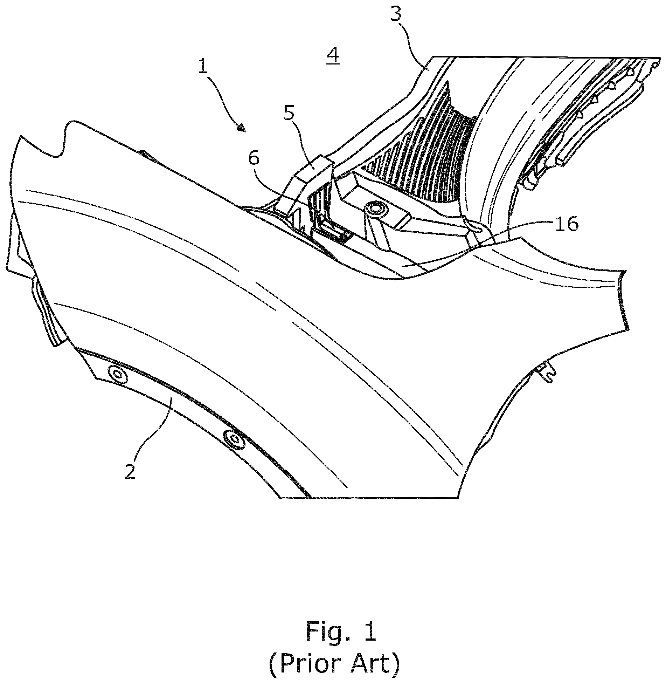

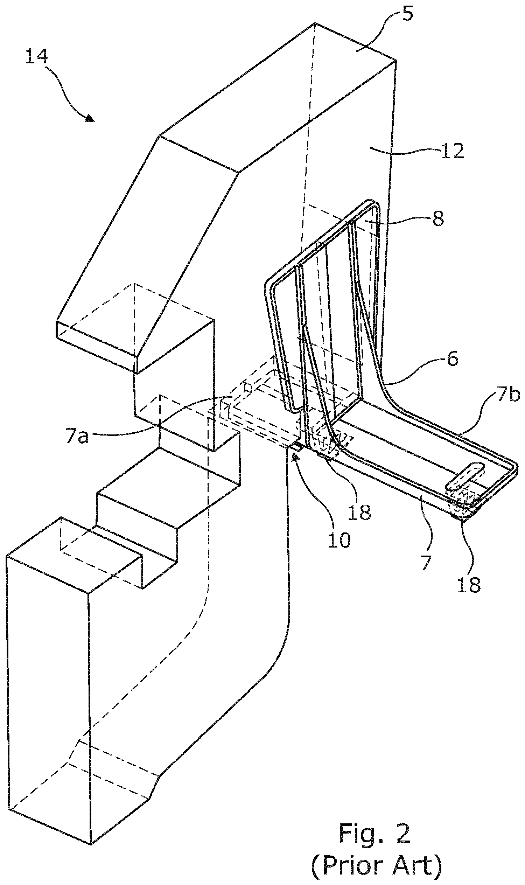

Figures 1 and 2 illustrate a known arrangement for mounting a foam pad to the structure of a vehicle using a clip. Figure 1 shows part of a vehicle structure 1 including a front, left-hand side fender or wing 2; and a cowl 3, which extends transversely across the vehicle at a rear end of the engine compartment 4. A foam pad 5 is mounted against a vertical face of the cowl 3 using a PP (polypropylene) clip 6.

The foam pad 5 and clip 6 are illustrated in more detail in Figure 2. The clip 6 has a generally planar, rectangular base 7. A planar pad attachment flange 8 is attached to the base partway along its length, extending in a direction perpendicular to the plane of the base; and dividing the base into a pad attachment portion 7a and a clip mounting portion 7b. The clip 6 is attached to the foam pad 5 with the upper surface of pad attachment portion 7a of the base adhered to a lower end face 10 of the pad 5 and the pad attachment flange 8 adhered to a side face 12 of the foam pad 5 to form a sub-assembly 14.

As illustrated in Figure 1, when fitted to the vehicle structure, the mounting portion 7b of the base sits on a horizontal ledge 16 of the cowl 3. A pair of snap-fit connection studs 18 project from the lower surface of the mounting portion 7b; and are pressed into corresponding holes in the horizontal ledge 16. Each stud 18 has resilient arms that are compressed as they pass through the hole; but which expand when the stud is fully inserted to engage with the under surface of the ledge to hold the clip 6 securely mounted to the ledge 16.

Whilst the known clip arrangement as illustrated in Figures 1 and 2 is effective, it has a number of drawbacks. Since the mounting portion 7b of the base 7 projects outwardly from pad 5, the sub-assembly 14 of clip 6 and pad 5 is not easy to package and supply to a vehicle manufacturer. This causes handling and storage issues, particularly when dealing with large numbers of the sub-assemblies 14. Furthermore, bonding a PP clip 6 to an EPDM foam pad 5 can be problematic, often requiring use of specialist adhesives. This can make it more difficult for a motor vehicle manufacturer to source alternative suppliers for the pad/clip sub-assembly 14.

JP2009074585A discloses a foam "panel fixing tool" which is designed to hold a large rectangular foam panel inside a steel pipe frame. As multiple fixing tools are used, each tool must offer several degrees of freedom to allow assembly and use. Although this tool can be detached from, and reassembled to the frame, it is clear that the tool would have to be substantially redesigned for use in an automotive application; where a foam pad needs to be held in place in a precise position and orientation for the life of a vehicle; often by a single clip. It is also unacceptable in an automotive application to have large gaps surrounding the foam as shown in JP2009074585A, as these gaps would let noise through.

There is a need then, for an alternative arrangement for mounting a foam pad to a vehicle structure which overcomes, or at least mitigates, some or all of the drawbacks of the known arrangements.

In particular, there is a need for an alternative pad mounting clip which can be used to mount a pad to a vehicle structure which overcomes, or at least mitigates, some or all of the drawbacks of the known clip arrangements.

There is also a need for an alternative method of mounting a pad to a vehicle structure, which overcomes, or at least mitigates, some or all of the drawbacks of the known methods.

### Summary of the Invention

Aspects of the invention relate to a pad mounting clip; to the combination of a pad and a clip for mounting the pad to a vehicle structure; to a vehicle, and to a method of mounting a foam pad to a vehicle structure.

According to an aspect of the invention, there is provided a clip according to claim 1.

Both the anti-rotation and anti-translation features must, of course, be designed in combination with the attachment features on the vehicle structure. In particular, a substantially square recess or hole may be provided in the vehicle structure to provide a suitable attachment point for the clip.

In the open configuration, the outer arm regions can be separated sufficiently to enable an end edge region of a pad which is to be mounted using the clip to be inserted between the arm regions. In an embodiment, the outer arm regions are movable to a position in which they extend generally co-planar with the base region in the open configuration.

The clip may be moulded as a single component from a polymeric material, such as polypropylene.

The outer arm regions may be connected to the base region by respective hinges extending in spaced parallel relation across the body. In an embodiment, the body is in the form of a relatively thin, plate-like member which is substantially planar when the clip is in the open configuration.

In an embodiment, each of the outer arm regions has a pad aperture engaging lug projecting from its inner face, the lugs aligning with and opposing one another when the clip is in the closed configuration. The pad aperture engaging lugs abut one another when the clip is in the closed configuration; and at least one pad aperture engaging lug is tapered so as to be narrower at an end distal from the body than at an end proximal to the body.

The, or each, pad aperture engaging lug may have an outer perimeter which is polygonal.

Where the locking formation has a surface forming at least part of a cone, the circular locking form of the locking formations has the advantage of being selfcentering during assembly. Self centering is vital to noise reduction, as it minimizes gaps around the engaging lug.

Where there is a pad aperture engaging lug on each of the outer arm regions, the locking arrangement may comprise corresponding locking formations on the pad aperture engaging lugs, the locking formations being configured to inter-engage when the clip is in the closed configuration to lock the clip in the closed configuration. The locking formations may comprise a projection on one of the pad aperture engaging lugs; and a recess or aperture on the other pad aperture engaging lug, in which the locking projection is received when the clip is in the second configuration.

The mounting formation may comprise at least one snap-fit connection stud which may be mounted on or to the body. In an embodiment, the at least one connection stud projects from an outer surface of one of the base region and the outer arm regions.

Alternatively, the body may comprise a mounting lug extending from one of the base region or the outer arm regions, and the mounting formation is provided on the mounting lug. The mounting formation may comprise an anti-pullout feature.

In accordance with a still further aspect of the invention, there is provided a combination of a clip in accordance with either of the above aspects and a pad, as described in claim 6.

The, or each, pad aperture engaging lug may be an interference fit in the pad aperture.

Each pad aperture engaging lug and the aperture may be configured to resist rotation of the clip relative to the pad. In an embodiment, The pad may be a foam pad; and may be an EPDM foam pad.

In accordance with a still further aspect of the invention, there is provided a vehicle having a foam pad mounted to part of its structure using a clip in accordance with either of the first two aspects of the invention set out above.

The vehicle necessarily comprises an aperture corresponding to the or each clip mounting formation, providing location for said mounting formation(s). The aperture(s) may be configured to substantially prevent rotational or translational movement of the clip relative to the vehicle structure. The aperture may be substantially square or rectangular.

In accordance with a yet further aspect of the invention, there is provided a method of mounting a foam pad to a vehicle structure using a clip in accordance with either of the first two aspects of the invention set out above, wherein the pad has opposing side faces and at least one end edge, an aperture being defined through the pad proximal but inset from said at least one end edge, the method comprising:
a. with the clip initially in the open configuration, engaging the clip about the pad and moving the clip to the closed configuration such that an inner surface of the central base region abuts said at least one end edge with the outer arm regions extending along opposite sides of the pad and the, or each, pad aperture engaging lug being received in the pad aperture;
b. engaging the locking formations to hold the clip in the closed position, secured to the pad; and:
c. attaching the clip to the vehicle structure using the mounting formation;
characterized in that:
the mounting formation comprises at least one feature preventing rotation thereof relative to the vehicle structure; and in that the mounting formation further comprises at least one feature preventing translational movement thereof relative to the vehicle structure; and in that at least one pad aperture engaging lug comprises antirotation features comprising at least four tapered sides.

The clip may be attached to the vehicle structure before the clip has been secured to the pad, or afterwards.

### Detailed Description of the Invention

In order that the invention may be more clearly understood, embodiments thereof will now be described - by way of example only - with reference to the accompanying drawings, of which:
Figure 1 is a perspective view of part of a vehicle structure, illustrating a known arrangement for mounting a foam pad to the structure using a clip bonded to the foam pad;
Figure 2 is a perspective view of the foam pad and clip shown in Figure 1;
Figure 3 is a perspective view of an embodiment of a clip for mounting a foam pad to a vehicle structure in accordance with an aspect of the invention, showing the clip in an open, generally flat configuration;
Figure 4 is a perspective view of the clip of Figure 3 but showing the clip in a closed, generally U-shaped configuration; and
Figure 5 is a perspective view with hidden detail of the clip of Figures 3 and 4 mounted to a foam pad (only part of which is shown).

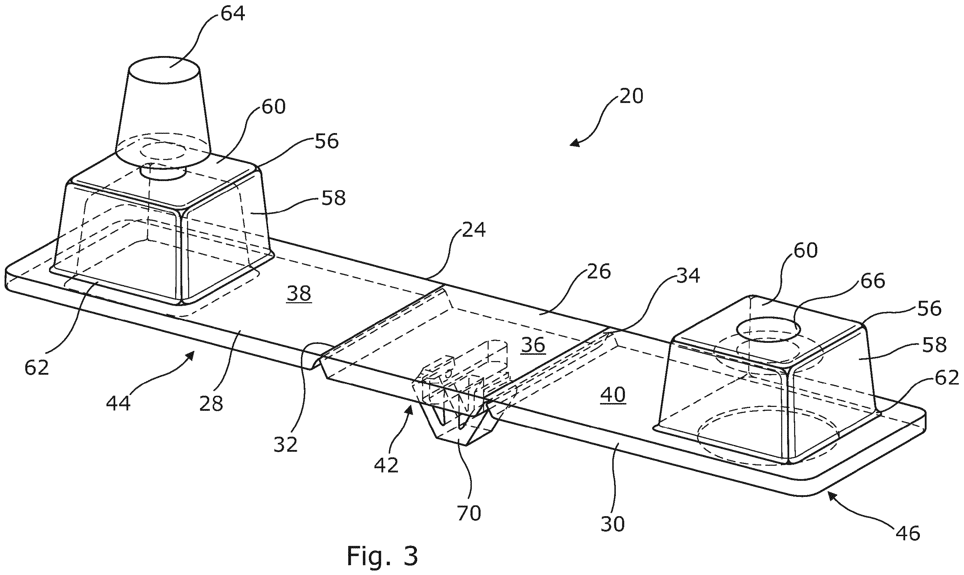

An embodiment of a clip 20 for mounting a foam pad 22 to a vehicle structure in accordance with an aspect of the invention is illustrated in Figures 3 to 5. The clip 20 can be made from any suitable material; but in an embodiment, is moulded as a single component from a polymeric material, such as PP.

The clip has a body 24 which is an elongate, relatively thin generally plate-like member. However, the body 24 can take other forms. The body 24 is divided into a central base region 26 and two outer arm regions 28, 30 by a pair of spaced parallel live hinges 32, 34 which extend transversely across the full width of the body 24. The arm regions 28, 30 can each be moved relative to the base region 26 about their respective hinges 32, 34 between a position in which they extend generally co-planar with the base region to define a first, open configuration of the clip as shown in Figure 1; and a second position in which they extend generally perpendicular to the base region; so that the body assumes a second closed, generally U-shaped configuration.

The surfaces 36, 38, 40 of the base region 26 and the arm regions 28, 30 which are directed inwardly when the clip is in its closed configuration will be referred to as inner surfaces, whilst the surfaces 42, 44, 46 that are directed outwardly will be referred to as outer surfaces.

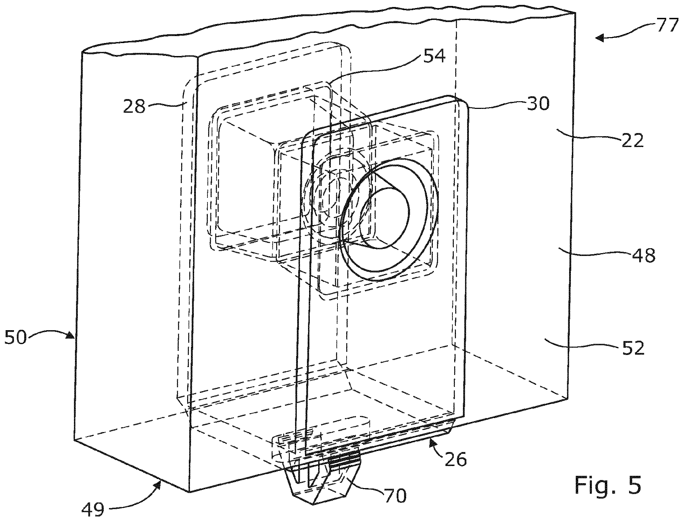

As illustrated in Figure 5, the clip 20 is configured so as to engage about an end region 48 of the foam pad 22 with the inner surface 36 of the base region 26 in contact with an end edge 49 of the pad and the inner surfaces 38, 40 of the arm regions 28, 30 contacting opposing side faces 50, 52 of the pad when extending substantially perpendicular to the base region 26. In the present embodiment, the foam pad 22 has a thickness of about 25mm; but the clip 20 can be appropriately dimensioned for use with foam pads of different thicknesses.

The foam pad 22 has an aperture 54 which extends through the thickness of the pad at a location proximal to, but spaced inwardly from, the end edge 49. Each of the arm regions 28, 30 has a pad aperture engaging lug 56 which projects from its inner surface 38, 40. The lugs 56 are received in the aperture 54 in the pad 22 when the clip engages about the end edge of the pad in its closed configuration as illustrated in Figure 5.

The arrangement is configured so that the lugs 56 engage the aperture 54 in a manner which resists rotation of the clip 20 relative to the pad 22. To this end, the lugs 56 may be an interference fit in the aperture 54; and the lugs and aperture may be shaped to resist rotation of the lugs 56 within the aperture 54. In the present embodiment, the lugs 56 have an outer periphery 58 that is square; and the aperture 54 is correspondingly square. However, the outer periphery 58 of the lugs 56 and the aperture 54 could have a different polygonal shape; such as triangular, star, hexagonal or the like. Indeed, the lugs 56 and the aperture could be produced with any one of a range of different noncircular shapes to resist rotation of the lugs.

Alternatively, the lugs could be circular; but provided with splines or teeth or similar projections on their outer surface, for engagement in suitably shaped grooves or slots formed in the pad 22 about the periphery of the aperture 54. Those skilled in the art will appreciate that the lugs 56 and aperture 54 can be shaped in many different way to resist rotation of lugs within the aperture.

The lugs 56 are located in opposition to one another when the clip 20 is in the closed configuration. When mounted to the pad 22, the distal ends 60 of the lugs abut one another. Conveniently, the lugs 56 are tapered so as to be smaller or narrower (that is to say they have a smaller cross sectional area) at their distal end 60 than at the end 62 proximal the base. Thus the lugs 56 in the embodiment shown have the shape of a frustum. This makes it easier for the lugs 56 to be inserted into the aperture 54 whilst also ensuring a tight, interference fit when the lugs 56 are fully inserted. The pad 22 being made of foam, the material surrounding the aperture 54 can be compressed to some extent by the lugs 56 when they are fully inserted to further ensure a tight fit. Each of the lugs 56 have a height approximately equal to half of the thickness of the pad 22, or slightly less; to ensure that the pad 22 is gripped tightly between the arm regions 28, 30 when the clip is closed. However, the lugs 56 on each arm could have different heights from one another. Indeed, in alternative embodiments, it may be sufficient for a pad aperture engaging lug 56 to be provided on only one of the arm regions 28, 30. In this case, the lug 56 may extend fully through the pad to engage the other arm region when the clip is closed. In a further alternative, there may be a plurality of lugs on one or both arm regions that engage in corresponding apertures in the pad. Such an arrangement would allow the use of circular lugs whilst inhibiting rotation of the clip relative to the pad.

In order to hold the clip 20 in position on the pad 22, the clip includes a locking arrangement for holding the clip in its closed configuration. In the present embodiment, the locking arrangement comprises corresponding locking formations on each of the lugs 56; which are configured to inter-engage when the clip 20 is closed, to lock the clip in the closed configuration. In Figures 3 to 5, the locking formations are illustrated somewhat schematically as a frusto-conical locking projection 64 on the distal end of a first of the lugs 56; and a correspondingly shaped locking aperture 66 in the distal end face of the other of the lugs 56.

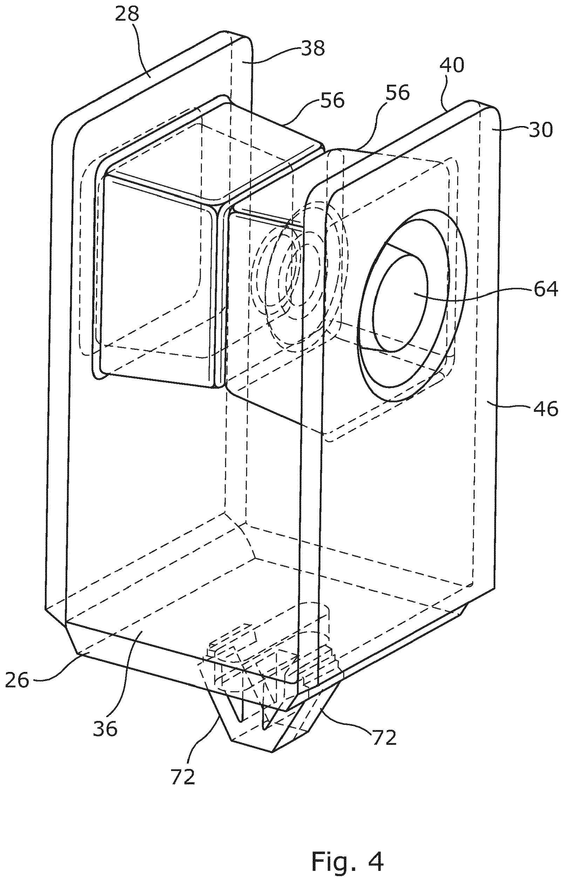

When the clip is moved from its open, flat configuration as shown in Figure 3 to the closed configuration as shown in Figure 4, the locking projection 64 enters the locking aperture 66. When inserted fully into the locking aperture 66, the outer periphery of the locking projection 64 is an interference fit in the locking aperture 66 so that the clip is held in the closed configuration by means of friction. The use of an interference fit or frictional locking engagement has the advantage that the clip 20 can be easily opened in the event it is necessary to remove it from the pad. However, other locking arrangements for securing the clip in the closed configuration can be used. For example, the locking projection 64 could take the form of a snap-fit connection stud having resiliently compressible arms. In this case, the locking aperture 66 may be undercut, the arrangement being such that the arms are initially compressed when the stud is inserted into the locking aperture; and expand when the stud is fully inserted, to engage with an inner surface of the undercut to prevent the stud from being withdrawn from the locking aperture.

However, it will be appreciated that many alternative locking arrangements can be adopted to hold the clip in its closed configuration mounted to a pad. Advantageously, the locking arrangement is configured to engage automatically when the clip 20 is placed in the closed configuration. A push type snap-fit locking arrangement is particularly suitable. In embodiments where there is only one lug 56 on one of the arm regions, locking formations can be provided on the lug and on the other arm region.

The clip 20 has a mounting formation 70 for securing the clip to the structure of a vehicle. The mounting formation 70 is in the form of a resilient, snap-fit connection stud having a pair of opposed resiliently compressible arms 72. The formation 70 is provided on the outer surface of the base region 26 for engagement in a suitably located hole (not shown) provided in a part of a vehicle structure. A snap-fit connection stud is particularly suitable for mounting the clip to a part of the vehicle structure which is formed from a relatively thin sheet material.

The clip 20 is mounted with the base 26 in contact with one side of the sheet. As the formation 70 is pressed into the hole, the arms 72 are initially compressed before springing out when the formation 70 is fully inserted in order to engage with the opposite side of the sheet, to prevent the formation from being withdrawn from the hole; and securely attaching the clip to the structure.

Whilst a push type snap-fit mounting formation 70 is suitable for mounting the clip in many vehicle applications, other types of mounting formation could be used, however only a snap fit connection is covered by the claims. For example, the mounting formation could take the form of a lug having an aperture through which a screw or other fixture can be inserted. Furthermore, whilst the embodiment as shown has a single mounting formation 70 on the outer surface of the base, the number and/or location of the mounting formation(s) can be varied to suit the requirements of any particular installation. For example, the clip 20 could have two or more mounting formations 70.

Furthermore, the mounting formation(s) need not be provided on the outer surface of the base region 26 but could be provided on the outer surface of one of the arm regions. Alternatively, one or more mounting formations could be located on an extension projecting from the base region and/or one of the arm regions. Such an extension could be in the form of a flange-like member which can extend parallel to the respective base or arm region or at an angle to the base or arm region. Those skilled in the art will appreciate that the clip 20 can be modified in a number of different ways in order to provide a mounting formation 70 at a suitable position for attachment to the vehicle structure, depending on the requirements of any particular installation.

In general, it is expected that the clip 20 and the foam pad 22 will be provided to a vehicle assembly plant separately from one another; and with the clip 20 in its first, generally flat, open configuration. This has the advantage that the clip 20 and pad 22 can be sourced separately. Since the pad 22 will generally be planar, handling and storage of the separate clip and pad will be easier than for the prior art sub-assembly 14.

At the assembly plant, the clip 20 is mounted to the pad 22 by folding it about the end region 48; so that the pad is clamped between the arm regions 28, 30 of the clip, and the lugs 56 engaged in the aperture 54. The locking formations 64, 66 engage to lock the clip in its second configuration clamped to the pad 22, so that the clip and pad form a sub-assembly 77. The sub-assembly 77 of the pad 22 with the clip 20 attached is then appropriately positioned on the vehicle structure. The mounting formation 70 is engaged in a hole on the vehicle structure to mount the clip 20 to the structure and to secure the foam pad 22 in position. In some installations, it may be possible to mount the clip 20 to the vehicle structure before securing the clip to the pad. The clip 20 is simple to use, and secures the foam pad 22 in position without the use of adhesive.

Whilst the clip 20 according to an aspect of the invention is particularly suited for mounting a EPDM foam pad to a vehicle structure, the arrangements disclosed could be adapted for mounting pads made of other materials to a vehicle structure; and indeed for mounting a pad to some other supporting structure or component, in order to hold the pad in position.

In the present embodiment, the outer arm regions 28, 30 can be positioned co-planar to the base region 26 when the clip is open. This makes storage and handling of the flat clip 20 prior to it being fitted to the pad 22 easy; and simplifies fitment of the clip to the pad. However, in other embodiments it may not be essential to be able to open the arm regions 28, 30 out flat, provided that the arm regions can be moved apart sufficiently that an end edge region of the pad can be introduced between them before the clip is closed.

The above embodiments are described by way of example only. Many variations are possible without departing from the scope of the invention as defined in the appended claims.

## Claims

1. A clip (20) for mounting a pad (22) to a vehicle structure, the clip comprising a body (24) having a central base region (26) and a pair of outer arm regions (28, 30), one outer arm region on either side of the base region, the outer arm regions being movable relative to the base region between:
a closed configuration of the clip in which the outer arm regions (28, 30) extend at an angle relative to the base region (26) so that the body is generally U-shaped, with inner faces (38, 40) of the outer arm regions (28, 30) in opposed relation to one another; and:
an open configuration in which the outer arm regions (28, 30) are spaced further apart than in the closed configuration, at least one arm region having a pad aperture engaging lug (56) projecting from its inner face (38, 40), the clip having a locking arrangement (64, 66) configured to hold the clip (20) in the closed configuration, and at least one mounting formation (70) for securing the clip to a vehicle structure when in the closed configuration;
wherein the mounting formation (70) comprises at least one feature (72) preventing rotation thereof relative to the vehicle structure;
and wherein the mounting formation further comprises at least one feature preventing translational movement thereof relative to the vehicle structure;
and in that at least one pad aperture engaging lug (56) comprises at least one anti-rotation feature (58);
and wherein the locking arrangement comprises corresponding locking formations (64, 66) mounted to the outer arm regions (28, 30), the locking formations being configured to inter-engage when the clip (20) is in the closed configuration to lock the clip in the closed configuration; wherein one locking formation (64) has a surface forming at least part of a cone, and the other formation (66) comprises an aperture arranged to receive said at least partconical form;
and wherein the locking formations (64, 66) are configured to inter-engage with a snap-fit;
and wherein the locking formations (64, 66) are moulded onto and into locking formation base parts which comprise anti-rotation features (58) comprising at least four tapered sides (58).

2. A clip (20) as claimed in claim 1, wherein each outer arm region (28, 30) has a pad aperture engaging lug (56) projecting from its inner face (38, 40), the lugs aligning with and opposing one another when the clip (20) is in the closed configuration; wherein the pad aperture engaging lugs (56) abut one another when the clip (20) is in the closed configuration;
and wherein at least one pad aperture engaging lug (56) is tapered so as to be narrower at an end (60) distal from the body (24) than at an end (62) proximal the body.

3. A clip (20) as claimed in claim 1 or claim 2, wherein the mounting formation (70) comprises at least one snap-fit connection stud.

4. A clip (20) as claimed in claim 3, wherein the at least one connection stud (70) projects from an outer surface (42, 44, 46) of one of the base region (26) and the outer arm regions (28, 30).

5. A clip (20) as claimed in any one of the preceding claims, wherein the mounting formation (70) comprises an anti-pull out feature (72).

6. A combination of a clip (20) as claimed in any one of the preceding claims and a pad (22), wherein the pad has opposing side faces (50, 52) and at least one end edge (49), an aperture (54) being defined through the pad proximal but inset from said at least one end edge (49), the clip (20) engaging about the pad (22) in said closed configuration such that an inner surface (36) of the central base region (26) abuts said at least one end edge (49) with the outer arm regions (28, 30) extending along opposite sides (50, 52) of the pad (22); and the, or each, pad aperture engaging lug (56) is received in the pad aperture (54); **characterized in that**:
the, or each, pad aperture engaging lug (56) and the aperture (54) in the pad have complementary shapes configured to resist rotation of the pad aperture engaging lug (56) within the aperture (54).

7. A vehicle having a foam pad (22) mounted to part of its structure using a clip (20) as claimed in any one of claims 1 to 5.

8. A vehicle as claimed in claim 7, wherein the or each clip mounting formation (70) locates in a corresponding aperture in the vehicle structure; and wherein said aperture is configured to substantially prevent rotational or translational movement of the clip relative to the vehicle structure.

9. A method of mounting a foam pad (22) to a vehicle structure using a clip (20) as claimed in any one of claims 1 to 5, wherein the pad (22) has opposing side faces (50, 52) and at least one end edge (49), an aperture (54) being defined through the pad (22) proximal but inset from said at least one end edge (49), the method comprising:
a. with the clip (20) initially in the open configuration, engaging the clip about the pad (22) and moving the clip to the closed configuration such that an inner surface of the central base region (26) abuts said at least one end edge (49) of the pad with the outer arm regions (28, 30) extending along opposite side faces (50, 52) of the pad and the, or each, pad aperture engaging lug (56) is received in the pad aperture (54);
b. engaging the locking formations (64, 66) to hold the clip (20) in the closed position secured to the pad (22); and
c. attaching the clip (20) to the vehicle structure using the mounting formation (70);
wherein the mounting formation (70) comprises at least one feature (72) preventing rotation thereof relative to the vehicle structure;
and wherein the mounting formation (70) further comprises at least one feature preventing translational movement thereof relative to the vehicle structure;
and wherein at least one pad aperture engaging lug (56) comprises anti-rotation features (58) comprising at least four tapered sides.

## Patentansprüche

1. Klammer (20) zum Montieren einer Polsterung (22) an einer Struktur des Fahrzeugs, wobei die Klammer einen Körper (24) umfasst, der eine zentrale Basisregion (26) und ein Paar äußerer Armregionen (28, 30) aufweist, wobei sich eine äußere Armregion auf jeder Seite der Basisseite befindet, wobei die äußeren Armregionen relativ zu der Basisregion beweglich sind zwischen:
einer geschlossenen Konfiguration der Klammer, in der sich die äußeren Armregionen (28, 30) in einem Winkel relativ zur Basisregion (26) erstrecken, sodass der Körper im Allgemeinen U-förmig ist, wobei die inneren Flächen (38, 40) der äußeren Armregionen (28, 30) einander gegenüberliegen; und:
einer offenen Konfiguration, in der die äußeren Armregionen (28, 30) weiter voneinander beabstandet sind als in der geschlossenen Konfiguration, wobei mindestens eine Armregion eine in eine Aussparung der Polsterung eingreifende Nase (56) aufweist, die von ihrer inneren Fläche (38, 40) vorsteht, wobei die Klammer eine Verriegelungsanordnung (64, 66) aufweist, die so konfiguriert ist, dass sie die Klammer (20) in der geschlossenen Konfiguration hält, und mindestens eine Montageformation (70) zum Befestigen der Klammer an einer Struktur des Fahrzeugs, wenn sie sich in der geschlossenen Konfiguration befindet;
wobei
die Montageformation (70) mindestens ein Merkmal (72) umfasst, das ihre Rotation relativ zur Struktur des Fahrzeugs verhindert;
und wobei die Montageformation ferner mindestens ein Merkmal umfasst, das eine Translationsbewegung relativ zur Struktur des Fahrzeugs verhindert;
und dass mindestens eine in die Aussparung der Polsterung eingreifende Nase (56) mindestens ein Antirotationsmerkmal (58) umfasst;
und wobei die Verriegelungsanordnung entsprechende Verriegelungsformationen (64, 66) umfasst, die an den äußeren Armregionen (28, 30) montiert sind, wobei die Verriegelungsformationen so konfiguriert sind, dass sie ineinander eingreifen, wenn sich die Klammer (20) in der geschlossenen Konfiguration befindet, um die Klammer in der geschlossenen Konfiguration zu verriegeln; wobei eine Verriegelungsformation (64) eine Oberfläche aufweist, die mindestens einen Teil eines Kegels bildet, und die andere Formation (66) eine Aussparung umfasst, die so angeordnet ist, dass sie die mindestens teilkonische Form empfängt;
und wobei
die Verriegelungsformationen (64, 66) so konfiguriert sind, dass sie in einen Schnappverschluss eingreifen;
und wobei
die Verriegelungsformationen (64, 66) auf und in Basisteile der Verriegelungsformation geformt werden, die Antirotationsmerkmale (58) umfassen, die mindestens vier konische Seiten (58) umfassen.

2. Klammer (20) nach Anspruch 1, wobei jede äußere Armregion (28, 30) eine in die Aussparung der Polsterung eingreifende Nase (56) aufweist, die von ihrer inneren Fläche (38, 40) vorsteht, wobei die Nasen miteinander fluchten und einander gegenüberstehen, wenn die Klammer (20) in der geschlossenen Konfiguration ist; wobei die in die Aussparung der Polsterung eingreifenden Nasen (56) aneinander abstützen, wenn sich die Klammer (20) in der geschlossenen Konfiguration befindet;
und wobei mindestens eine in die Aussparung der Polsterung eingreifende Nase (56) so verjüngt ist, dass sie an einem vom Körper (24) distalen Ende (60) schmaler ist als an einem dem Körper proximalen Ende (62).

3. Klammer (20) nach Anspruch 1 oder 2, wobei die Montageformation (70) mindestens eine einrastende Verbindung umfasst.

4. Klammer (20) nach Anspruch 3, wobei der mindestens eine Verbindungsbolzen (70) von einer äußeren Oberfläche (42, 44, 46) der Basisregion (26) oder der äußeren Armregionen (28, 30) vorsteht.

5. Klammer (20) nach einem der vorstehenden Ansprüche, wobei die Montageformation (70) ein Herausziehschutzmerkmal (72) umfasst.

6. Kombination aus einer Klammer (20) nach einem der vorstehenden Ansprüche und einer Polsterung (22), wobei die Polsterung gegenüberliegende Seitenflächen (50, 52) und mindestens eine Endkante (49) aufweist, wobei eine Aussparung (54) durch die Polsterung proximal, aber einliegend von der mindestens einen Endkante (49) definiert ist, wobei die Klammer (20) in der geschlossenen Konfiguration um die Polsterung (22) herum eingreift, sodass eine innere Oberfläche (36) der zentralen Basisregion (26) an der mindestens einen Endkante (49) abstützt, wobei sich die äußeren Armregionen (28, 30) entlang gegenüberliegender Seiten (50, 52) der Polsterung (22) erstrecken;
und die oder jede, in die Aussparung der Polsterung eingreifende Nase (56) ist in der Aussparung für die Polsterung (54) empfangen; **dadurch gekennzeichnet, dass**:
die oder jede in die Aussparung der Polsterung eingreifende Nase (56) und die Aussparung (54) in der Polsterung komplementäre Formen aufweisen, die so konfiguriert sind, dass sie einer Rotation der in die Aussparung der Polsterung eingreifenden Nase (56) innerhalb der Aussparung (54) widerstehen.

7. Fahrzeug, das eine Schaumstoffpolsterung (22) aufweist, die an einem Teil seiner Struktur unter Verwendung einer Klammer (20) montiert ist, wie in einem der Ansprüche 1 bis 5 beansprucht.

8. Fahrzeug nach Anspruch 7, wobei die oder jede Klammermontageformation (70) in einer entsprechenden Aussparung in der Struktur des Fahrzeugs angeordnet ist; wobei die Aussparung so konfiguriert ist, dass sie eine Rotations- oder Translationsbewegung der Klammer relativ zur Struktur des Fahrzeugs im Wesentlichen verhindert.

9. Verfahren zum Montieren einer Schaumstoffpolsterung (22) an einer Struktur des Fahrzeugs unter Verwendung einer Klammer (20) nach einem der Ansprüche 1 bis 5, wobei die Polsterung (22) gegenüberliegende Seitenflächen (50, 52) und mindestens eine Endkante (49) aufweist, wobei eine Aussparung (54) durch die Polsterung (22) in der Nähe der mindestens einen Endkante (49), jedoch mit Abstand zu dieser, definiert ist, das Verfahren umfassend:
a. mit der Klammer (20) anfänglich in der offenen Konfiguration, Eingreifen der Klammer um die Polsterung (22) herum und Bewegen der Klammer in die geschlossene Konfiguration, sodass eine innere Oberfläche der mittleren Basisregion (26) an der mindestens einen Endkante (49) der Polsterung anliegt, mit den äußeren Armregionen (28, 30), die sich entlang der gegenüberliegenden Seitenflächen (50, 52) der Polsterung erstrecken, und die oder jede, in die Aussparung der Polsterung eingreifende Nase (56) in der Aussparung der Polsterung (54) empfangen wird;
b. Eingreifen der Verriegelungsformationen (64, 66), um die Klammer (20) in der geschlossenen Position an der Polsterung (22) befestigt zu halten; und
c. Anbringen der Klammer (20) an der Struktur des Fahrzeugs unter Verwendung der Montageformation (70);
wobei
die Montageformation (70) mindestens ein Merkmal (72) umfasst, das ihre Rotation relativ zur Struktur des Fahrzeugs verhindert;
und wobei
die Montageformation (70) ferner mindestens ein Merkmal umfasst, das ihre Translationsbewegung in Bezug auf die Struktur des Fahrzeugs verhindert;
und wobei
mindestens eine in die Aussparung der Polsterung eingreifende Nase (56) Antirotationsmerkmale (58) umfasst, die mindestens vier abgeschrägte Seiten umfassen.

## Revendications

1. Pince (20) permettant de monter un tampon (22) sur une structure de véhicule, la pince comprenant un corps (24) ayant une région de base centrale (26) et une paire de régions de bras externes (28, 30), une région de bras externe de chaque côté de la région de base, les régions de bras externe étant mobiles par rapport à la région de base :
une configuration fermée de la pince dans laquelle les régions de bras externes (28, 30) s'étendent selon un angle par rapport à la région de base (26) de sorte que le corps est généralement en forme de U, avec des faces internes (38, 40) des régions de bras externe (28, 30) dans une relation opposée l'une par rapport à l'autre ; et :
une configuration ouverte dans laquelle les régions de bras externes (28, 30) sont espacées plus loin que dans la configuration fermée, au moins une région de bras ayant un ergot de mise en prise d'ouverture de tampon (56) faisant saillie à partir de sa face interne (38, 40), la pince ayant un agencement de verrouillage (64, 66) conçu pour maintenir la pince (20) dans la configuration fermée, et au moins une formation de montage (70) permettant de fixer la pince à une structure de véhicule lorsqu'elle est dans la configuration fermée ;
dans laquelle
la formation de montage (70) comprend au moins un élément (72) empêchant sa rotation par rapport à la structure de véhicule ;
et dans laquelle la formation de montage comprend en outre au moins un élément empêchant son mouvement de translation par rapport à la structure de véhicule ;
et en ce qu'au moins un ergot de mise en prise d'ouverture de tampon (56) comprend au moins un élément antirotation (58) ;
et dans laquelle l'agencement de verrouillage comprend des formations de verrouillage correspondantes (64, 66) montées sur les régions de bras externes (28, 30), les formations de verrouillage étant conçues pour se mettre en prise lorsque la pince (20) est dans la configuration fermée pour verrouiller la pince dans la configuration fermée ; dans laquelle une formation de verrouillage (64) a une surface formant au moins une partie d'un cône, et l'autre formation (66) comprend une ouverture agencée pour recevoir ladite forme au moins partiellement conique ;
et dans laquelle
les formations de verrouillage (64, 66) sont conçues pour venir en prise avec un encliquetage ;
et dans laquelle
les formations de verrouillage (64, 66) sont moulées sur et dans des parties de base de formation de verrouillage qui comprennent des éléments antirotation (58) comprenant au moins quatre côtés effilés (58).

2. Pince (20) selon la revendication 1, dans laquelle chaque région de bras externe (28, 30) a un ergot de mise en prise d'ouverture de tampon (56) faisant saillie à partir de sa face interne (38, 40), les ergots s'alignant et s'opposant l'un à l'autre lorsque la pince (20) est dans la configuration fermée ; dans laquelle les ergots de mise en prise d'ouverture de tampon (56) viennent en butée l'un contre l'autre lorsque la pince (20) est dans la configuration fermée ;
et dans laquelle au moins un ergot de mise en prise d'ouverture de tampon (56) est effilé de manière à être plus étroit à une extrémité (60) distale du corps (24) qu'à une extrémité (62) proximale au corps.

3. Attache (20) selon la revendication 1 ou la revendication 2, dans laquelle la formation de montage (70) comprend au moins un goujon de raccord par encliquetage.

4. Attache (20) selon la revendication 3, dans laquelle l'au moins un goujon de raccord (70) fait saillie à partir d'une surface externe (42, 44, 46) de l'une de la région de base (26) et des régions de bras externe (28, 30).

5. Attache (20) selon l'une quelconque des revendications précédentes, dans laquelle la formation de montage (70) comprend un élément anti-traction (72).

6. Combinaison d'une pince (20) selon l'une quelconque des revendications précédentes et un tampon (22), dans laquelle le tampon a des faces latérales opposées (50, 52) et au moins un bord d'extrémité (49), une ouverture (54) étant définie à travers le tampon à proximité mais inséré à partir dudit au moins un bord d'extrémité (49), la pince (20) venant en prise autour du tampon (22) dans ladite configuration fermée de telle sorte qu'une surface interne (36) de la région de base centrale (26) vient en butée contre ledit au moins un bord d'extrémité (49) avec les régions de bras externe (28, 30) s'étendant le long de côtés opposés (50, 52) du tampon (22) ; et le ou chaque ergot de mise en prise d'ouverture de tampon (56) est reçu dans l'ouverture de tampon (54) ; **caractérisée en ce que** :
le ou chaque ergot de mise en prise de tampon (56) et l'ouverture (54) dans le tampon ont des formes complémentaires conçues pour résister à la rotation de l'ergot de mise en prise d'ouverture de tampon (56) à l'intérieur de l'ouverture (54).

7. Véhicule ayant un tampon de mousse (22) monté sur une partie de sa structure à l'aide d'une pince (20) selon l'une quelconque des revendications 1 à 5.

8. Véhicule selon la revendication 7, dans lequel la ou chaque formation de montage de pince (70) se situe dans une ouverture correspondante dans la structure de véhicule ; et dans lequel ladite ouverture est conçue pour empêcher sensiblement un mouvement de rotation ou de translation de la pince par rapport à la structure de véhicule.

9. Procédé de montage d'un tampon de mousse (22) sur une structure de véhicule à l'aide d'une pince (20) selon l'une quelconque des revendications 1 à 5, dans lequel le tampon (22) a des faces latérales opposées (50, 52) et au moins un bord d'extrémité (49), une ouverture (54) étant définie à travers le tampon (22) à proximité mais inséré à partir dudit au moins un bord d'extrémité (49),
le procédé comprenant :
a. avec la pince (20) initialement dans la configuration ouverte, la mise en prise de la pince autour du tampon (22) et le mouvement de la pince vers la configuration fermée de telle sorte qu'une surface interne de la région de base centrale (26) vient en butée contre ledit au moins un bord d'extrémité (49) du tampon avec les régions de bras externe (28, 30) s'étendant le long de faces latérales opposées (50, 52) du tampon et du, ou chaque ergot de mise en prise de tampon (56) est reçu dans l'ouverture de tampon (54) ;
b. la mise en prise des formations de verrouillage (64, 66) pour maintenir la pince (20) dans la position fermée fixée au tampon (22) ; et
c. la fixation de la pince (20) à la structure de véhicule à l'aide de la formation de montage (70) ;
dans lequel
la formation de montage (70) comprend au moins un élément (72) empêchant sa rotation par rapport à la structure de véhicule ;
et dans lequel
la formation de montage (70) comprend en outre au moins un élément empêchant son mouvement de translation par rapport à la structure de véhicule ;
et dans lequel
au moins un ergot de mise en prise d'ouverture de tampon (56) comprend des éléments antirotation (58) comprenant au moins quatre côtés effilés.
